# EUROPÄISCHE PATENTANMELDUNG

(11) **EP 2 138 466 A1**
(43) Veröffentlichungstag der Anmeldung: **30.12.2009**
(21) Anmeldenummer: 09001595.9
(22) Anmeldetag: 05.02.2009
(51) Int. Cl.: C03B 9/34, C03B 9/347

(54) **Verfahren und Vorrichtung zur Herstellung eines hohlen Gegenstands**

(30) Priorität: 01.04.2008 DE 102008016826
(71) Anmelder: Ardagh Glass GmbH, 23812 Wahlstedt (DE)
(72) Erfinder: Segendorf, Oliver, 20253 Hamburg (DE); Wulff, Ulrich, 23812 Wahltstedt (DE)
(74) Vertreter: Aulich, Martin

(57) **Zusammenfassung**

Bei der Herstellung von Glasflaschen kommt es gelegentlich zu sogenannten Flügeln am Flaschenhals (18). Diese Flügel stellen einen scharfkantigen Grat am Flaschenhals (18) dar, der die Flasche unbrauchbar macht.

Die Erfindung sieht es vor, eine zur Herstellung der Flasche dienende Fertigform (13) und ein Mündungswerkzeug (10) relativ zueinander formschlüssig zu zentrieren. Diese Zentrierung erfolgt so, dass die Längsmittelachsen des Mündungswerkzeugs (10) und der Fertigform (13) auf einer gemeinsamen Linie liegen, die mittig durch eine Trennebene (16) der Fertigform (13) verläuft. Durch diese mittige Zentrierung des Mündungswerkzeugs (10) zur Trennebene (16) kann beim Schließen der Formhälften (11, 12) der Fertigform (13) kein Glas in der Trennebene (16) eingeklemmt werden. Dadurch wird die Bildung von die Flasche unbrauchbar machenden Flügeln vermieden.

## Beschreibung

### Bezugszeichenliste:

- 10: Mündungswerkzeug
- 11: Formhälfte
- 12: Formhälfte
- 13: Fertigform
- 14: Formfläche
- 15: Formfläche
- 16: Trennebene
- 17: Flaschenkörper
- 18: Flaschenhals
- 19: Außengewinde
- 20: Nest
- 21: Längsmittelachse
- 22: Führungsfläche
- 23: Führungsfläche
- 24: Nut
- 25: Anschrägung
- 26: unterer Zylinderabschnitt
- 27: Scheitelpunkt
- 28: Erhöhung
- 29: Anschrägung

Die Erfindung betrifft ein Verfahren zur Herstellung eines hohlen Glasgegenstands gemäß dem Oberbegriff des Anspruchs 1. Des Weiteren betrifft die Erfindung eine Vorrichtung zur Herstellung eines hohlen Glasgegenstands gemäß dem Oberbegriff des Anspruchs 8.

Die Herstellung hohler Glasgegenstände, insbesondere solcher, die einen sich gegenüber einem Körper verjüngenden Hals aufweisen, wie beispielsweise Flaschen, erfolgt durch ein sogenanntes Blasformen. Ein in einer Vorform grob vorgeformtes Külbel wird gehalten durch ein Mündungswerkzeug. Vom Mündungswerkzeug wird das Külbel im Bereich des späteren Halses der Flasche oder dergleichen gehalten und so einer Fertigform zugeführt. Die Fertigform besteht aus zwei Formhälften, die zusammen- und auseinanderfahrbar sind. Die zusammengefahrenen Formhälften liegen an einer Trennebene aneinander.

Bei der vorstehend beschriebenen Herstellung hohler Glasgegenstände kann beim Schließen der Fertigform unterhalb des Mündungswerkzeugs Glasmaterial des Külbels in der Trennebene der Fertigform eingequetscht werden. Der Glasgegenstand erhält dann im Bereich des Halses sogenannte Flügel. Diese scharfkantigen Flügel führen dazu, dass der Glasgegenstand unbrauchbar und somit Ausschuss ist.

Der Erfindung liegt nunmehr die Aufgabe zugrunde, ein Verfahren und eine Vorrichtung zur Herstellung hohler Glasformgegenstände, insbesondere Flaschen, zu schaffen, womit Flügel im Bereich des Halses des hohlen Glasgegenstands vermeidbar sind.

Ein Verfahren zur Lösung dieser Aufgabe weist die Maßnahmen des Anspruchs 1 auf. Demnach wird das Mündungswerkzeug gegenüber der Fertigform zentriert. Infolge dieser Zentrierung ist sichergestellt, dass das Külbel sich zentrisch im Bereich des zum Formen des hohlen Glasgegenstands liegenden Hohlraums (Nest) der Fertigform befindet. Es kann so kein Material des Külbels zwischen die Formhälften gelangen. Dadurch wird die Bildung unzulässiger Flügel am Hals des herzustellenden hohlen Glasgegenstands, insbesondere einer Flasche, vermieden.

Bevorzugt ist das Verfahren so ausgebildet, dass das Mündungswerkzeug gegenüber der Fertigform beim Schließen derselben zentriert wird. Das Mündungswerkzeug mit dem von diesem gehaltenen Külbel ist so während des Schließens der Fertigform und insbesondere bei geschlossener Fertigform gegenüber derselben, insbesondere dem Nest, unmittelbar zentriert. Diese Zentrierung wird beim Schließen der Fertigform zwischen der Fertigform und dem Mündungswerkzeug hergestellt, und zwar bevorzugt durch eine formschlüssige Führung des Mündungswerkzeugs gegenüber der Fertigform. Infolge der formschlüssigen Führung des Mündungswerkzeugs gegenüber der Fertigform kann beim Schließen der Fertigform kein Glasmaterial des Külbels zwischen den Formhälften in der Trennebene eingeklemmt werden, wodurch eine Flügelbildung an der Außenseite des Halses des zu formenden hohlen Glasgegenstands zuverlässig vermieden wird.

Verfahrensmäßig ist des Weiteren vorgesehen, dass das Mündungswerkzeug gegenüber der Fertigform in der Trennebene zwischen den beiden Formhälften der Fertigform vorzugsweise formschlüssig zentriert wird. Diese Zentrierung bewirkt, dass das Külbel in Bezug auf die Trennebene beim Schließen der Fertigform mittig positioniert wird, also die Längsmittelachse des Külbels in der Mitte der Trennebene, das heißt die durch die Trennebene verlaufende Längsmittelachse der Fertigform, liegt. Die Zentrierung des Külbels mit dem Mündungswerkzeug in einer Richtung gegenüber der Fertigform, nämlich in der Trennebene, reicht aus, weil in der anderen Richtung quer zur Trennebene beim Schließen der Fertigform das Külbel zwischen die Formhälften gelangt, ohne dass dabei die Gefahr des Einklemmens von Teilen des Külbels zwischen den Formhälften besteht.

Gemäß einer bevorzugten Ausgestaltung des Verfahrens ist vorgesehen, dass das Mündungswerkzeug zwischen quer zur Trennebene verlaufenden Führungsflächen der Fertigform formschlüssig zentriert wird. Diese Führungsflächen zentrieren das Mündungswerkzeug mit dem von diesen gehaltenen Külbel mittig auf der Trennebene, so dass in Bezug auf die Trennebene die Längsmittelachse des Külbels und des Nests der Fertigform exakt zusammenfallen. In Richtung quer zur Trennebene ist hingegen das Mündungswerkzeug längs der Führungsflächen der Fertigform beweglich, so dass bereits bei mittig auf der Trennebene zentriertem Külbel die Formhälften der Fertigform zusammen- und auch auseinanderfahrbar sind. Trotz der Zentrierung des Mündungswerkzeugs gegenüber der Fertigform können so die Formhälften der Fertigform zum Schließen derselben zusammengefahren und zum Öffnen auseinandergefahren werden.

Eine Vorrichtung zur Lösung der eingangs genannten Aufgabe weist die Merkmale des Anspruchs 8 auf. Bei dieser Vorrichtung ist die Fertigform mit quer zur Trennebene zwischen den Formhälften verlaufenden Führungsflächen für das Mündungswerkzeug versehen. Die Führungsflächen zentrieren das Mündungswerkzeug beim Schließen der Formhälften so gegenüber der Trennebene, dass eine Längsmittelachse des Mündungswerkzeugs und des von diesem gehaltenen Külbens mittig bezogen auf das Nest in der Fertigform auf der Trennebene liegen. Mit dieser mittigen Zentrierung können Randbereiche des Külbels beim Schließen der Fertigform nicht mehr zwischen den Formhälften eingequetscht werden. Dadurch können keine aus Glasmaterial des Külbels gebildeten Flügel in der Trennebene entstehen, die den hergestellten hohlen Glasgegenstand unbrauchbar machen würden.

Bevorzugt weist die Fertigform zwei parallele Führungsflächen auf. Zwischen diesen parallelen Führungsflächen ist das Mündungswerkzeug formschlüssig zentrierbar. Infolge der Führungsflächen erfolgt diese Zentrierung nur in der Trennebene, aber nicht quer dazu, weil in Richtung quer zur Trennebene das Mündungswerkzeug an den Führungsflächen entlanggleiten kann. Zu diesem Zweck ist des Weiteren vorgesehen, dass die Führungsflächen der Fertigform senkrecht zur Trennebene zwischen den Formhälften verlaufen.

Es ist des Weiteren vorgesehen, dass die parallelen Führungsflächen auf gegenüberliegenden Seiten der Längsmittelachse der Fertigform liegen, und zwar in gleichmäßigem Abstand von der Längsmittelachse. Somit sind die Führungsflächen mit gleichmäßigem Abstand von der Mitte der Trennebene angeordnet, wodurch die Führungsflächen formschlüssig und unmittelbar das Mündungswerkzug quasi zwangsweise in der Mitte der Trennfläche zentrieren.

Bei einer bevorzugten Ausgestaltung der Vorrichtung ist vorgesehen, dass auch das Mündungswerkzeug zwei Führungsflächen aufweist, die derart ausgebildet sind, dass sie mit den Führungsflächen der Fertigform korrespondieren. An den Führungsflächen der Fertigformen wird demzufolge das Mündungswerkzeug mit den diesen zugeordneten Führungsflächen formschlüssig zentriert.

Die Führungsflächen der Fertigform oder der Mündungsform sind in ihrer Längsrichtung, also quer zur Trennebene der Fertigform, mit einem unebenen, nämlich bogenförmigen oder auch angeschrägten Verlauf versehen. Dadurch ist bei noch nicht vollständig geschlossenen Formhälften der Fertigform Spiel zwischen den Führungsflächen der Fertigform und des Mündungswerkzeugs vorhanden. Dieses Spiel wird mit zunehmendem Schließvorgang der Fertigform reduziert, bis es bei geschlossener Fertigform oder vorzugsweise schon bei nahezu geschlossener Fertigform so weit wie möglich beseitigt ist. Dadurch erfolgt eine allmähliche Zentrierung des Mündungswerkzeugs beim Schließen der Formhälften der Fertigformen.

Bevorzugt verlaufen die Längserstreckungsrichtungen der Führungsflächen der Fertigform und des Mündungswerkzeugs quer, vorzugsweise senkrecht, zur Trennebene der Fertigform. Dadurch kommt die formschlüssige Zentrierung der Fertigform zum Mündungswerkzeug bezüglich der Mitte der Trennebene zustande. Diese formschlüssige Zentrierung führt dazu, dass das Külbel bezogen auf die Trennebene mittig im Nest der Fertigform liegt und dabei die Bildung von Flügeln am Hals des herzustellenden hohlen Glasgegenstands verhindert wird. In ihrer Längserstreckungsrichtung lassen die Führungen aber Bewegungen zwischen der Fertigform und dem Mündungswerkzeug zu. Diese Bewegungen verlaufen quer zur Trennebene, das heißt in einer Richtung, in der keine Flügel entstehen können. Die Führungsflächen lassen so ein Schließen und auch Öffnen der Fertigform zu, wobei jedoch insbesondere gegen Ende des Schließvorgangs das Mündungswerkzeug mit dem daran gehaltenen Külbel in der Mitte der Trennebene und des Nests der Fertigform zuverlässig formschlüssig zentriert ist.

Die beiden Führungsflächen des Mündungswerkzeugs weisen in der Mitte, also dort, wo sie die Trennebene schneiden, einen größten Abstand zueinander auf. Hingegen verringert sich der Abstand zwischen den Führungsflächen am Mündungswerkzeug zu den gegenüberliegenden Enden hin. Dadurch kommt der vorzugsweise bogenförmige, ballige oder auch rampenartige Verlauf der Führungsflächen am Mündungswerkzeug zustande, wobei durch den größten Abstand der Führungsflächen im mittleren Bereich derselben sichergestellt ist, dass bei geschlossener Fertigform, vorzugsweise schon kurz vor dem vollständigen Schließen der Fertigform, das Mündungswerkzeug mit dem davon gehaltenen Külbel exakt auf der Mitte der Trennebene zentriert ist und dadurch Randbereiche des Külbels beim Schließen der Fertigform nicht in der Trennebene zwischen den Formhälften eingeklemmt werden können.

Gemäß einer weiteren bevorzugten Ausgestaltung der Vorrichtung ist vorgesehen, die Führungsflächen der Fertigform und/oder des Mündungswerkzeugs zu ihren freien Längskanten hin abzuschrägen. Dadurch wird das Ineinandergreifen der Führungsflächen des Mündungswerkzeugs und der Fertigform erleichtert, wobei während des Zusammentreffens der Führungsflächen aufgrund der Abschrägung noch ein verhältnismäßig großes Spiel vorhanden ist, das zu einer groben Vorzentrierung der Fertigform zum Mündungswerkzeug führt.

Ein bevorzugtes Ausführungsbeispiel der Erfindung wird nachfolgend anhand der Zeichnung näher erläutert. In dieser zeigen:
- Fig. 1: eine Seitenansicht eines mittig geschnittenen Mündungswerkzeugs und einer Formhälfte der Fertigform von der Trennebene aus,
- Fig. 2: eine Draufsicht auf die geschlossene Fertigform, und
- Fig. 3: eine Unteransicht des Mündungswerkzeugs.

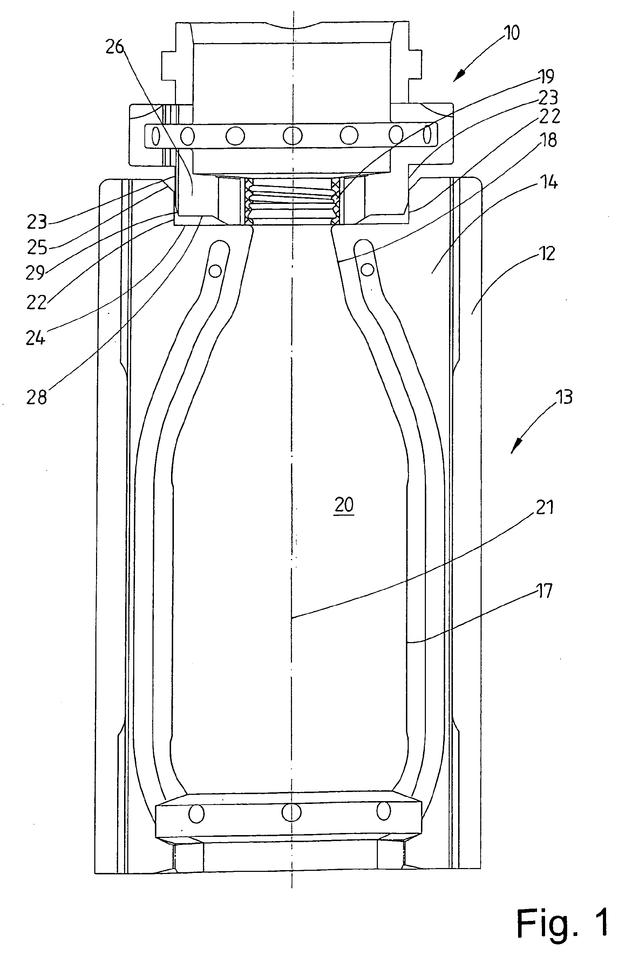

Die in den Figuren gezeigte Vorrichtung dient zur Herstellung eines hohlen Glasgegenstands in Form einer nicht gezeigten Flasche mit einem Schraubgewinde am oberen Flaschenhals. Die Vorrichtung verfügt über ein in der Fig. 1 im mittigen Längsschnitt gezeigtes Mündungswerkzeug 10 und eine aus vorzugsweise zwei gleichen Formhälften 11 und 12 gebildete Fertigform 13. In der Fig. 1 ist die vordere Formhälfte 11 der Fertigform 13 nicht dargestellt. Dadurch ist eine Formfläche 14 der hinteren Formhälfte 12 in der Fig. 1 sichtbar. Die in der Figur nicht gezeigte vordere Formhälfte 11 verfügt über eine gleiche Formfläche 15. Bei zusammengefahrenen Formhälften 11 und 12 der Fertigform 13 liegen ihre Formflächen 14 und 15 in einer Trennebene 16 aneinander an.

Die Fig. 1 lässt die äußere Gestalt der von der erfindungsgemäßen Vorrichtung herzustellenden Glasflasche erkennen. Demnach werden von der Fertigform 13 der Flaschenkörper 17 und ein oberer Teil des sich gegenüber dem Flaschenkörper 17 verjüngenden Flaschenhalses 18 gebildet. Ein oberer Teil des Flaschenhalses 18 mit einem Außengewinde 19 wird vom Mündungswerkzeug 10 vorhanden. Zum Formen der Glasflasche ist ein die Außenkontur derselben aufweisender Hohlraum, nämlich ein Nest 20, in der Fertigform 13 und dem Mündungswerkzeug 10 vorhanden. Mittig durch den in der Fertigform 13 sich befindenden Teil des Nests 20 der Glasflasche verläuft die Trennebene 16. Demzufolge ist in jeder Formhälfte 11 und 12 eine Hälfte des sich in der Fertigform 13 befindlichen Teil des Nests 20 der Glasflasche vorgesehen. Im unteren Teil des Mündungswerkzeugs 10 befindet sich ein Hohlraum, der den oberen Teil des Nests 20 aufweist. Das ist derjenige Teil des Nests 20, der zur Bildung des das Außengewinde 19 aufweisenden Teils des Flaschenhalses 18 der Glasflasche dient.

Eine senkrechte Längsmittelachse 21 des Nests 20, die der Längsmittelachse der herzustellenden Glasflasche entspricht, verläuft mittig durch die Trennebene 16. Die Längsmittelachse 21 der herzustellenden Glasflasche entspricht somit gleichzeitig der senkrechten Mittellinie der Trennebene 16 bzw. der Formflächen 14 und 15 der Formhälften 11 und 12. Idealerweise liegt auf der Längsmittelachse 21 der herzustellenden Glasflasche und des Nests 20 auch die Längsmittelachse des Mündungswerkzeugs 10.

Zum Entformen einer fertigen Glasflasche werden die Formhälften 11 und 12 der Fertigform 13 auseinandergefahren und dadurch die Fertigform 13 geöffnet. Ebenso wird das Mündungswerkzeug 10 geöffnet. Beim Auseinanderfahren der Formhälften 11 und 12 werden ihre an der Trennebene 16 bei geschlossener Fertigform aneinanderliegenden Formflächen 14 und 15 voneinander beabstandet. Vor dem Schließen der Fertigform 13 wird das Mündungswerkzeug 10 mit einem vorgelochten Külbel, das in den Figuren nicht gezeigt ist, beschickt. Unter dem Mündungswerkzeug 10 mit dem darunterhängenden Külbel wird die Fertigform 13 geschlossen durch Zusammenfahren ihrer Formhälften 11 und 12, bis die Formflächen 14 und 15 an der Trennebene 16 zusammenliegen.

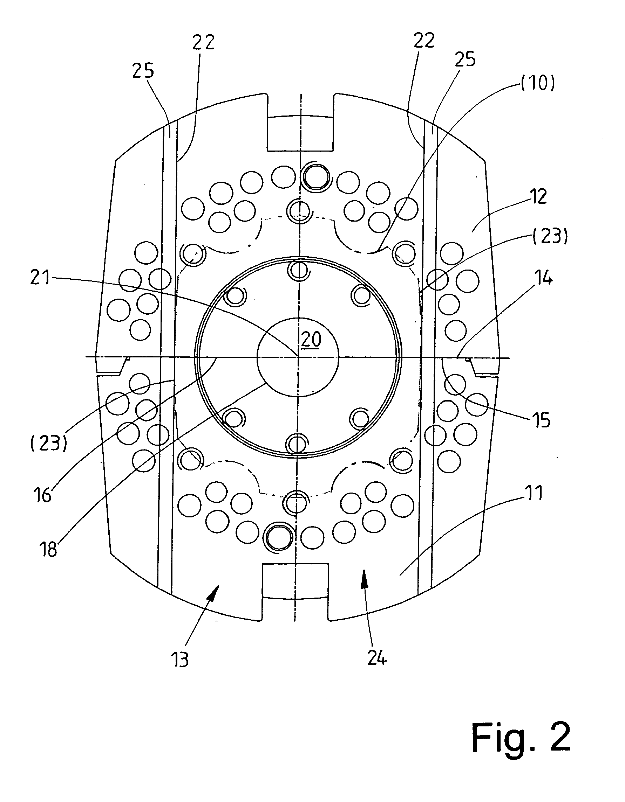

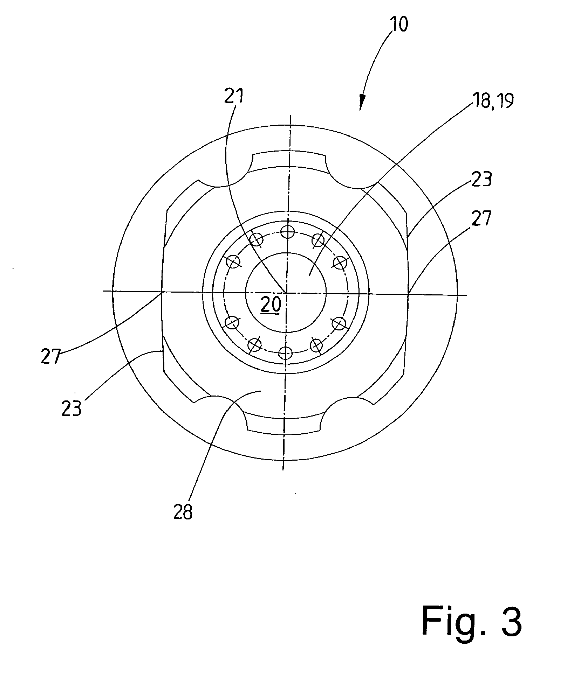

Erfindungsgemäß ist vorgesehen, das Mündungswerkzeug 10 gegenüber der Fertigform 13 zu zentrieren, damit die Längsmittelachsen des Mündungswerkzeugs 10 und der Fertigform 13 zusammenfallen und somit auf der Längsmittelachse 21 des Nests 20 und der Mitte der Trennebene 16 liegen. Dadurch wird verhindert, dass Glasmaterial an den Randbereichen des vom Mündungswerkzeug 10 herunterhängenden Külbels in der Trennebene 16 zwischen den Formflächen 14 und 15 der Formhälften 11 und 12 eingeklemmt wird. Zu diesem Zweck ist gemäß der Erfindung vorgesehen, das Mündungswerkzeug 10 unmittelbar, insbesondere durch Formschluss, gegenüber der Fertigform 13 zu zentrieren. Diese Zentrierung erfolgt durch einen unmittelbaren Formschluss zwischen dem Mündungswerkzeug 10 und der Fertigform 13. Zu diesem Zweck sind Führungsflächen 22 an der Fertigform 13 und hiermit korrespondierende Führungsflächen 23 am Mündungswerkzeug 10 vorgesehen. Die Führungsflächen 22 und 23 verlaufen quer, insbesondere senkrecht, unter einem Winkel von 90° zur Trennebene 16 (Fig. 2 und 3). Dadurch findet eine Zentrierung zwischen dem Mündungswerkzeug 10 und der Fertigform 13 derart statt, dass die Längsmittelachse des Mündungswerkzeugs 10 auf der Mittellinie der Trennebene 16 liegt und dadurch das Mündungswerkzeug 10 und die Fertigform 13 in der Trennebene 16 gegeneinander gleichachsig zentriert sind, wodurch Teile des vom Mündungswerkzeug 10 gehaltenen Külbels beim Schließen der Fertigform 13 nicht in der Trennebene 16 zwischen den Formflächen 14 und 15 eingeklemmt werden können. Die Folge ist eine zuverlässige Vermeidung der Flügelbildung am Flaschenhals 18 der herzustellenden Glasflasche.

In Richtung quer zur Trennebene 16 erfolgt eine Zentrierung des Mündungswerkzeugs 10 gegenüber der Fertigform 13 in an sich bekannter Weise durch einen in den Figuren nicht gezeigten Träger bzw. Schwenkarm des Mündungswerkzeugs 10 und/oder des entsprechend synchronen Zusammenfahrens der Formhälften 11 und 12 der Fertigform 13. Dabei kommt es in dieser Richtung nicht so sehr auf eine exakte Zentrierung zwischen dem Mündungswerkzeug 10 und der Fertigform 13 an als in der Trennebene 16, weil in Richtung quer zur Trennebene 16 nicht die Gefahr besteht, dass beim Schließen der Fertigform 13 das Külbel zwischen den Formflächen 14 und 15 der Formhälften 11 und 12 eingeklemmt wird.

Die Fertigform 13 verfügt über zwei parallele Führungsflächen 22. Diese Führungsflächen 22 verlaufen senkrecht, das heißt unter 90° quer durch die Trennebene 16 (Fig. 2). Beide Führungsflächen 22 liegen auf gegenüberliegenden Seiten der Längsmittelachse 21 des Nests 20, und zwar jeweils mit gleichem Abstand. Wie insbesondere die Fig. 2 erkennen lässt, wird jede der beiden parallelen Führungsflächen 22 zur Hälfte von der einen Formhälfte 12 und der anderen Formhälfte 11 gebildet. Bei zusammengefahrenen Formhälften 11 und 12 entstehen die beiden parallelen, durchgehenden Führungsflächen 22, die rechtwinklig zur Trennebene 16 verlaufend sich über beide Formhälften 11 und 12 erstrecken. Bei zusammengefahrenen Formhälften 11 und 12 schließen die auf die Formhälften 11 und 12 verteilten Hälften der Führungsflächen 22 lückenlos aneinander an. Bei auseinandergefahrenen Formhälften 12 und 13 hingegen wird jede Führungsfläche 22 der Fertigform 13 mittig im Bereich der Trennebene 16 geteilt.

Die beiden parallelen Führungsflächen 22 der Fertigform 13 sind gebildet an den Rändern einer an der Oberseite 24 der Fertigform 13 durchgehenden Nut 24. Die Mitte der Nut 24 verläuft durch eine die Mitte der Trennebene 16 senkrecht schneidende Längsmittelebene der Fertigform 13 (Fig. 2). Die Fig. 1 lässt erkennen, dass freie, obere Längskanten der die Führungsflächen 22 bildenden aufrechten Längsränder der Nut 24 mit Anschrägungen 25 versehen sind.

Ein unterer Zylinderabschnitt 26 des Mündungswerkzeugs 10 weist die beiden Führungsflächen 23 auf. Diese korrespondieren mit den Führungsflächen 22 der Fertigform 13. Auch die Führungsflächen 23 sind gegenüberliegenden Seiten einer quer zur Mitte der Trennebene 16 verlaufenden vertikalen Längsmittelebene des Mündungswerkzeugs 10 zugeordnet, und zwar spiegelsymmetrisch. Die Führungsflächen 23 am Mündungswerkzeug 10 sind nicht ebenflächig, sondern leicht gebogen bzw. ballig ausgebildet. Ein Scheitelpunkt 27 liegt in der Mitte jeder Führungsfläche 23. Dadurch befinden sich die Scheitelpunkte 27 der Führungsflächen 23 bei geschlossener Fertigform 13 in Deckung mit der Trennebene 16. In den auf der Trennebene 16 liegenden Scheitelpunkten 27 weisen die Führungsflächen 23 den größten Abstand zueinander auf, wobei mittig zwischen den Scheitelpunkten 27 die Mitte der Trennebene 16 und die Längsmittelachse 21 der Fertigform 13 liegen. Dieser Abstand entspricht dem Abstand der Führungsflächen 22 der Fertigform 13, so dass an den Scheitelpunkten 27 die formschlüssige Zentrierung zwischen dem Mündungswerkzeug 10 und der Fertigform 13 relativ zur auf der Längsmittelachse 21 liegenden Mitte der Trennebene 16 erfolgt. Ausgehend von den mittleren Scheitelpunkten 27 verläuft jede Führungsfläche 23 zu ihren gegenüberliegenden Enden derart bogenförmig, dass der Abstand zwischen den gegenüberliegenden Führungsflächen 23 zu den gegenüberliegenden Enden derselben hin kontinuierlich abnimmt. Es ist denkbar, an der Stelle der Scheitelpunkte 27 einen mittleren Bereich jeder Führungsfläche 23 ebenflächig auszubilden, so dass in diesem mittleren Bereich die Führungsflächen 23 parallel zueinander verlaufen und erst in daran anschließenden gegenüberliegenden Endbereichen in bogenförmige oder leicht schräggerichtete, ebene Abschnitte übergehen, entlang derer der Abstand der beiden gegenüberliegenden Führungsflächen 23 am Mündungswerkzeug 10 zu den gegenüberliegenden Enden der Führungsflächen 23 hin kontinuierlich abnimmt.

Die Führungsflächen 23 sind gegenüberliegenden Seiten einer mittigen Erhöhung 28 an der Unterseite des Mündungswerkzeugs 10 zugeordnet. Die Führungsflächen 23 verlaufen wie die Führungsflächen 22 quer zur Trennebene 16. Der Abstand der Führungsflächen 23 ist derart gewählt, dass diese mit Führungsflächen 22 der Fertigform 13 korrespondieren. Aufgrund der ungeraden Gestalt der Führungsflächen 23 ist der Abstand ihrer Scheitelpunkte 27 bzw. der kurzen mittleren Flächen so groß wie der Abstand der parallelen ebenflächigen Führungsflächen 22 der Fertigform 13. Bevorzugt wird ein geringfügiges Spiel zwischen den Führungsflächen 22 und 23 vorgesehen.

Auch die Führungsflächen 23 weisen zu ihren freien, unteren Längskanten Anschrägungen 29 auf. Die Anschrägungen 29 sind so gewählt, dass sie ein leichtes Eintauchen der Führungsflächen 23 unter dem Mündungswerkzeug 10 in den Bereich der Führungsflächen 22 auf der Fertigform 13 gewährleisten.

Das erfindungsgemäße Verfahren sieht es vor, dass das Mündungswerkzeug 10 und die Fertigform 13 relativ zueinander zentriert werden. Dieses Zentrieren geschieht vorzugsweise unmittelbar durch einen Formschluss zwischen Führungsflächen 22 und 23 des Mündungswerkzeugs 10 und der Fertigform 13.

Die Zentrierung zwischen dem Mündungswerkzeug 10 und der Fertigform 13 erfolgt bevorzugt nur längs einer Achse auf der Trennebene 16 zwischen den Formflächen 14 und 15 der Formhälften 11 und 12 der Fertigform 13. In dieser auf der Trennebene 16 liegenden Ebene wird das Mündungswerkzeug 10 mittig zur Trennebene 16 zentriert, so dass eine Längsmittelachse des Mündungswerkzeugs 10 und eine Längsmittelachse 21 des Nests 20 in der Fertigform 13 auf einer gemeinsamen Linie auf der Trennebene 16 liegen, wobei bevorzugt diese Linie mittig durch die Trennebene 16 verläuft.

Die genannte einachsige Zentrierung des Mündungswerkzeugs 10 gegenüber ihrer Fertigform 13 führt dazu, dass beim Schießen der Fertigform 13, also beim Zusammenfahren der Formhälften 11 und 12, das Mündungswerkzeug 10 sich mittig in der Trennebene 16 befindet, so dass Material des vom Mündungswerkzeug 10 gehaltenen Külbels zwischen den Formflächen 14 und 15 der Formhälften 11 und 12 beim Schließen der Fertigform 13 nicht eingeklemmt werden kann.

Insbesondere wenn die unebenen Führungsflächen 23 am Mündungswerkzeug 10 oder alternativ auch unebene Führungsflächen 22 an der Fertigform 13 einen mittigen, geraden Bereich aufweisen, der senkrecht zur Trennebene 16 verläuft, erfolgt die Zentrierung des Mündungswerkzeugs 10 gegenüber der Mitte der Trennebene 16 schon vor dem Schließen der Fertigform 13, wodurch ein Einklemmen von Glasmaterial des Külbels zwischen den Formhälften 11 und 12 zuverlässig vermieden wird. Die Zentrierung des Mündungswerkzeugs 10 erfolgt in diesem Falle vor dem vollständigen Schließen der Fertigform, 13 durch eine Verschiebung des Mündungswerkzeugs 10 längs einer geradlinigen Bahn auf der Trennebene 16, nämlich längs der schrägen oder bogenförmigen Endbereiche der Führungsflächen 23 oder auch der Führungsflächen 22. Anhand dieser Führungsflächen 23, die an ihren Endbereichen einen deutlich geringeren Abstand zueinander aufweisen als die Führungsflächen 22 der Fertigform 13, erfolgt bei Lageabweichungen der Mitte des Mündungswerkzeugs 10 gegenüber der Fertigform 13 eine Seitwärtsbewegung des Mündungswerkzeugs 10 zur Fertigform 13, und zwar so, dass die Längsmittelachse des Mündungswerkzeugs 10 auf der Trennebene 16 zur Mitte der Trennebene 16 verschoben wird, bis die Längsmittelachse des Mündungswerkzeugs 10 auf die Längsmittelachse 21 des Nests 20 in der Fertigform 13 liegt.

## Patentansprüche

1. Verfahren zur Herstellung eines hohlen Glasgegenstands, wobei aus einem Külbel in einem Mündungswerkzeug (10) und einer Fertigform (13) der hohle Gegenstand gebildet wird, **dadurch gekennzeichnet, dass** das Mündungswerkzeug (10) und die Fertigform (13) relativ zueinander zentriert werden.

2. Verfahren nach Anspruch 1, **dadurch gekennzeichnet, dass** das Mündungswerkzeug (10) und die Fertigform (13) beim Schließen der Fertigform (13) vorzugsweise unmittelbar zueinander zentriert werden.

3. Verfahren nach Anspruch 1 oder 2, **dadurch gekennzeichnet, dass** das Mündungswerkzeug (10) gegenüber der Fertigform (13) formschlüssig zentriert wird.

4. Verfahren nach einem der vorhergehenden Ansprüche, **dadurch gekennzeichnet, dass** die Fertigform (13) zwei Formhälften (11, 12) aufweist, die zum Schließen der Fertigform (13) an einer Trennebene (16) zusammenfahrbar sind, wobei das Mündungswerkzeug (10) derart gegenüber der Fertigform (13) zentriert wird, dass beim Schließen der Fertigform (13) in der Trennebene (16) kein Glasmaterial des Külbels eingeklemmt wird.

5. Verfahren nach einem der vorhergehenden Ansprüche, **dadurch gekennzeichnet, dass** das Mündungswerkzeug (10) in Bezug auf die Trennebene (16) gegenüber der Fertigform (13) zentriert wird, vorzugsweise in der Mitte der Trennebene (16) zentriert wird.

6. Verfahren nach einem der vorhergehenden Ansprüche, **dadurch gekennzeichnet, dass** das Mündungswerkzeug (10) derart gegenüber der Fertigform (13) zentriert wird, dass eine Längsmittelachse (21) des Mündungswerkzeugs (10) in der Trennebene (16) auf einer Längsmittelachse (2 1) der Fertigform (13) zentriert wird.

7. Verfahren nach einem der vorhergehenden Ansprüche, **dadurch gekennzeichnet, dass** das Mündungswerkzeug (10) zwischen quer zur Trennebene (16) verlaufenden Führungsflächen (22) der Fertigform (13) formschlüssig zentriert wird, vorzugsweise auf einer Achse, die auf der Trennebene (16) liegt.

8. Vorrichtung zur Herstellung eines hohlen Glasgegenstands mit einer Fertigform (13) aus zwei Formhälften (11, 12), die an einer Trennebene (16) der Fertigform (13) zusammenfahrbar sind, und ein Mündungswerkzeug (10), **dadurch gekennzeichnet, dass** die Fertigform (13) quer zur Trennebene (16) verlaufende Führungsflächen (22) für das Mündungswerkzeug (10) aufweist.

9. Vorrichtung nach Anspruch 8, **dadurch gekennzeichnet, dass** die Fertigform (13) zwei parallele Führungsflächen (22) aufweist, zwischen denen das Mündungswerkzeug (10) formschlüssig zentrierbar ist.

10. Vorrichtung nach Anspruch 8 oder 9, **dadurch gekennzeichnet, dass** das Mündungswerkzeug (10) zwei mit den Führungsflächen (22) der Fertigform (13) korrespondierende Führungsflächen (23) aufweist.

11. Vorrichtung nach einem der Ansprüche 8 bis 10, **dadurch gekennzeichnet, dass** die Längserstreckungsrichtungen der Führungsflächen (22, 23) der Fertigform (13) und des Mündungswerkzeugs (10) quer, vorzugsweise senkrecht, zur Trennebene (16) verlaufen.

12. Vorrichtung nach Anspruch 8 bis 11, **dadurch gekennzeichnet, dass** die beiden Führungsflächen (22) der Fertigform (13) oder die Führungsflächen (23) des Mündungswerkzeugs (10) in Längsrichtung einen ungeraden Verlauf aufweisen, vorzugsweise einen bogenförmigen Verlauf oder einen teilweise schrägen Verlauf.

13. Vorrichtung nach Anspruch 12, **dadurch gekennzeichnet, dass** die beiden Führungsflächen (23) des Mündungswerkzeugs (10) in der Mitte bzw. in einem mittleren Abschnitt einen größten Abstand zueinander aufweisen und sich der Abstand zwischen den Führungsflächen (23) des Mündungswerkzeugs (10) zu den gegenüberliegenden Enden der Führungsflächen (23) verringert.

14. Vorrichtung nach einem der Ansprüche 8 bis 13, **dadurch gekennzeichnet, dass** die Führungsflächen (22, 23) der Fertigform (13) und/oder des Mündungswerkzeugs (10) an ihren freien Längskanten abgeschrägt sind, vorzugsweise durch Anschrägungen (25, 29).
